# EUROPÄISCHE PATENTSCHRIFT

(11) **EP 1 168 645 B1**
(45) Veröffentlichungstag und Bekanntmachung des Hinweises auf die Patenterteilung: **27.12.2006**
(21) Anmeldenummer: 01109681.5
(22) Anmeldetag: 19.04.2001
(51) Int. Cl.: H04B 1/40, H04B 1/16

(54) **Sende/Empfangsschaltung**
Transmitter-receiver circuit
Circuit émetteur-récepteur

(30) Priorität: 06.06.2000 DE 10027869
(43) Veröffentlichungstag der Anmeldung: 02.01.2002
(73) Patentinhaber: Fraunhofer-Gesellschaft zur Förderung der angewandten Forschung e.V., 80686 München (DE)
(72) Erfinder: Rohmer, Günter, Dr.-Ing., 91058 Erlangen (DE); Gerhäuser, Heinz, Prof. Dr., 91344 Waischenfeld (DE); Spies, Peter, Dipl.-Ing., 91058 Erlangen (DE)
(74) Vertreter: Schoppe, Fritz

(56) Entgegenhaltungen:
- EP-A- 0 522 720
- EP-A- 0 792 077
- EP-A- 0 831 414
- US-A- 5 493 717
- US-A- 5 666 355

## Beschreibung

Die vorliegende Erfindung bezieht sich auf Sende/Empfangsschaltungen und insbesondere auf Sende/Empfangsschaltungen für schnurlose Telephone, Datenübertragungsgeräte, wie z.B. Datenübertragungsgeräte des DECT- und Bluetooth-Standards, Mobiltelephone, wie z.B. GSM-, DCS-, PCS-Mobiltelephone, und ISM-Band-Datenübertragungen.

Für Sende/Empfangs-Schaltungen, die bei schnurlosen bzw. tragbaren Sende/Empfangs-Einheiten verwendet werden, ist es aufgrund der begrenzten zur Verfügung stehenden Batteriekapazität besonders wichtig, daß dieselben einen niedrigen Leistungsverbrauch aufweisen. Bei den zur Zeit verwendeten Sende/Empfangsschaltungen für die im vorhergehenden erwähnten Geräte wird der Leistungsverbrauch während des Betriebs der Sende/Empfangs-Schaltung verringert, indem durch eine Leistungsverwaltung ganze Systeme, die mehrere Blöcke, wie z.B. Sende- oder Empfangs-Pfad, enthalten, ein- oder ausgeschaltet bzw. in einen Standby-Betrieb versetzt werden. Während des Sendens können beispielsweise ein Mischer, ein Zwischenfrequenzverstärker und eine Frequenzmodulationserfassungsschaltung bzw. ein FM-Detektor, soweit dieselben vorhanden sind, deaktiviert werden. Während eines Empfangsvorgangs können beispielsweise eine Sendeendstufe und ein Vorverstärker ausgeschaltet werden. Der Synthesizer bzw. die Frequenzerzeugungsschaltung ist sowohl während des Sendeals auch des Empfangsvorgangs erforderlich und kann folglich nur dann in einen Standby- (Bereitschafts-) Betriebszustand versetzt werden, wenn weder gesendet noch empfangen wird.

Neben diesem Ein- und Ausschalten von einzelnen Komponenten existiert bei einigen derzeit verfügbaren Sende/Empfangsschaltungen eine kontinuierliche, dynamische Steuerung der Verstärkung des Zwischenfrequenzverstärkers sowie der Sendeendstufe, die während des Betriebs dynamisch geregelt werden. Zur Steuerung des Zwischenfrequenzverstärkers wird die Empfangssignalstärke RSSI (RSSI = Receive Signal Strength Indicator) gemessen und die Verstärkung entsprechend dieser Empfangssignalstärke bzw. dem empfangenen Signalpegel eingestellt, was als AGC- (Automatic Gain Control = automatische Verstärkungssteuerung) Steuerung bezeichnet wird.

Ein Nachteil der bestehenden Sende/Empfangs-Systeme besteht darin, daß viele Funktionsblöcke während des Betriebs für die eigentlichen Aufgaben überdimensioniert sind und folglich zu viel Verlustleistung erfordern. Der Grund hierfür besteht darin, daß die einzelnen Komponenten für die schlechtesten Empfangs- und Sendebedingungen ausgelegt sein müssen, d.h. für den "Worst-Case"-Fall mit maximalen Nachbarkanalstörern und minimaler Empfangsleistung. Bei DECT-Systemen kann die Empfangssignalstärke jedoch beispielsweise zwischen -94 dBm und +10 dBm variieren, wobei der Empfangsleistungsminimalwert von -94 dBm nur in den seltensten Fällen erreicht wird. Auch die Nachbarkanalstörer erreichen nur selten die in den Spezifikationen angegebenen Maximalwerte, falls sie überhaupt vorhanden sind.

Folglich sind viele Komponenten von Sende/Empfangsschaltungen durchschnittlich, d.h. den größten Teil der Betriebszeit über, überdimensioniert, was zu einem unnötig hohen Leistungsverbrauch der Schaltung führt. Viel zu hohe Anforderungen werden an das Phasenrauschen des Oszillators (VCO; VCO = Voltage Controlled Oscillator) einer Sende/Empfangs-Schaltung gestellt, die lediglich dann notwendig sind, wenn das Empfangssignal sehr schlecht ist, oder Störsignale starker Leistung empfangen werden. Die rauscharmen Eingangsverstärker und das Zwischenfrequenzfilter sind ebenfalls für widrigste Empfangsbedingungen ausgelegt und somit für die meiste Zeit des Betriebs überdimensioniert.

Die US-5,666,355 beschreibt eine Leistungsverbrauchssteuerung für eine Kommunikationssystem-Teilnehmereinheit eines TDMA-Systems. Die Leistungsverbrauchssteuerung basiert auf Zeitschlitz-Zuständen als Betriebsparameter. Einzelne Schaltungskomponenten werden je nach Zeitschlitz-Zustand ein- oder ausgeschaltet. Zu den leistungsverbrauchsreduzierenden Maßnahmen gehören die Steuerung des BIAS-Stromes des Leistungsverstärkers und die Reduzierung der Taktrate von CMOS-Schaltungskomponenten.

Die US-5,493,717 beschreibt eine Schaltungsanordnung zur Nachbarkanalerkennung und -Unterdrückung in einem Rundfunkempfänger. Der Rundfunkempfänger umfasst eine Antenne, eine Vorstufe, eine Mischstufe, ein ZF-Filter, einen Stufenschalter, der zwischen mehreren ZF-Filtern wechselt und von einer Vergleichsstufe gesteuert wird, ein ZF-Filter, einen FM-Demodulator, einen NF-Verstärker und einen Lautsprecher. Die Vergleichsschaltung erfasst Nachbarkanalstörungen unter Verwendung der Signalpegel vor und nach einem speziellen fest ausgewählten ZF-Filter, wobei basierend auf dem Vergleich der beiden Signalpegel eines der mehreren Filter oder das besondere Filter selbst ausgewählt wird.

Die EP 5 22 720 A1 beschreibt die Einstellung der Taktfrequenz einer elektrischen Schaltung und insbesondere die Verringerung der Taktfrequenz zum Schonen der Batterie, wenn sich die elektrische Schaltung, und insbesondere eine CMOS-Schaltung, nicht in einem aktiven Zustand befindet.

Die EP 0 831 414 A2 beschreibt ein tragbares Radioterminal, welches zur Reduzierung des Leistungsverbrauches ohne Beeinträchtigung der Übertragungsqualität einen Schalter aufweist, mit welchem die Leistungsversorgung zu einer Sendeeinheit geliefert werden kann oder unterbrochen werden kann. Eine Steuereinheit steuert den Schalter bei einem Leistungssparmodus derart, dass, wenn sich eine Empfangsfeldstärke unterhalb eines ersten Schwellwertes befindet, der Schalter die Leistungsversorgung zu der Sendeeinheit unterbricht, und, wenn die Empfangsfeldstärke wieder einen zweiten Schwellwert übersteigt, der Schalter die Leistungsversorgung zu der Sendeeinheit wieder zulässt, wobei während der Unterbrechung der Leistungsversorgung die zu sendenden Signale in einem Speicher zwischengespeichert werden.

EP 0 792 077 A1 beschreibt eine mobile Mehrdienstation mit einem Stromsparmodus.

Die Aufgabe der vorliegenden Erfindung besteht darin, eine Sende/Empfangsschaltung zu schaffen, bei der der Betriebsleistungsverbrauch niedriger ist.

Diese Aufgabe wird durch eine Sende/Empfangsschaltung gemäß Anspruch 1 gelöst.

Eine erfindungsgemäße Sende/Empfangsschaltung weist eine Mehrzahl von elektronischen Komponenten auf, die verbunden sind, um zum Senden und Empfangen von Daten zusammenzuwirken, wobei die Komponenten durch Steuersignale steuerbar sind. Die Sende/Empfangsschaltung weist ferner eine Steuerlogik, die mit der Mehrzahl von elektronischen Komponenten verbunden ist, zum Überwachen von momentanen Betriebsparametern der Sende/Empfangsschaltung und zum Ausgeben von Steuersignalen an die Mehrzahl von elektronischen Komponenten abhängig von den momentanen Betriebsparametern auf, wobei die Steuersignale bei den Komponenten zumindest zwei Parameter aus einer Gruppe von Parametern umfassen, die aus der Versorgungsspannung, der Verstärkung, einer Filterauswahl und einer Taktgeschwindigkeit, mit der wenigstens eine der Komponenten betrieben wird, besteht.

Gemäß einem Ausführungsbeispiel der vorliegenden Erfindung umfaßt eine Sende/Empfangsschaltung einen Sendeteil, einen Empfangsteil und eine Synthesizer-Schaltung bzw. Frequenzerzeugungsschaltung. Die Steuerlogik steuert über Spannungssignale abhängig von der Empfangssignalstärke oder ähnlichen Signalen, wie z.B. Batterieladezustandsinformationen, Empfangssignalstörinformationen und Signale eines Basisband-Prozessors, eine Mehrzahl von Spannungsreglern die mit entsprechenden elektronischen Komponenten der Sende/Empfangsschaltung verbunden sind. Die Sende/Empfangsschaltung umfaßt ferner mehrere Zwischenfrequenzfilter, aus denen die Steuerlogik einen den momentanen Betriebsparametern angepaßtes Filter auswählen kann, das einerseits eine ausreichend schmale Frequenzbandbreite und andererseits einen möglichst niedrigen Einfügeverlust aufweist. Die Signal/Empfangsschaltung verwendet als momentane Betriebsparameter die Empfangssignalstärke, Batterieladezustandsinformationen, Empfangssignalstörinformationen und Signale eines Basisband-Prozessors, die angeben, ob ein Sende- oder Empfangsvorgang vorliegt, um die elektronischen Komponenten derart zu steuern, daß die Versorgungsspannung und die Verstärkung ansprechend auf eine Zunahme der Eingangssignalstärke reduziert, die Versorgungsspannung und die Verstärkung ansprechend auf eine Abnahme des Batterieladezustands weiter reduziert, bei Abnahme von Empfangssignalstörungen ein Filter mit niedrigerer Einfügedämpfung und breiterem Durchlaßfrequenzband ausgewählt, und die Taktgeschwindigkeit ansprechend auf eine Abnahme der Datenratenübertragungsrate reduziert wird. Zur Steuerung der Verstärkung und der Versorgungsspannung werden Spannungsregler, wie z.B. Linear- und Schaltregler, verwendet.

Ein Vorteil der vorliegenden Erfindung besteht darin, daß durch Verwenden der momentanen Betriebsparameter, wie z.B. den Empfangsbedingungen oder dem Batterieladezustand, ein angepaßter Betriebszustand der Sende/Empfangsschaltung sichergestellt werden kann. Anders als bei herkömmlichen Sende/Empfangsschaltungen, die einzelne Teilsysteme, wie z.B. den Sende- oder Empfangspfad, aktivieren oder deaktivieren, oder lediglich den Zwischenfrequenzverstärker oder die Sendeendstufe dynamisch regeln, wird bei der vorliegenden Erfindung durch das dynamische Steuern, Konfigurieren und Versorgen von einzelnen Komponenten entsprechend den momentanen Betriebsparametern während des Betriebes ein höchst effizienter, leistungsoptimierter Betrieb der gesamten Sende/Empfangsschaltung erzielt.

Zudem wird durch die getrennte Leistungsversorgung der einzelnen elektronischen Komponenten der Schaltung durch die verschiedenen Spannungsregler eine Entkopplung aller Komponenten erzielt. Durch diese Entkopplung wirken sich starke Laständerungen, wie z.B. das Ein- oder Ausschalten einer oder mehrerer Komponenten, nicht als eine Schwankung der Versorgungsspannung aus, wie es der Fall ist, wenn die elektronischen Komponenten direkt mit der gleichen Spannungsversorgung verbunden wären. Zudem können die Spannungsregler verwendet werden, um die elektronischen Komponenten in einen Standby-Modus zu versetzen, bei dem den elektronischen Komponenten keine Versorgungsspannung zugeführt wird, und folglich Leckströme vermieden werden, und die Spannungsregler selbst einen minimalen Versorgungsstrom erfordern. Auf diese Weise kann folglich die Betriebszeit einer batteriebetriebenen Sende/Empfängereinheit verlängert werden.

Folglich kann durch Verwenden der erfindungsgemäßen Sende/Empfangsschaltung, die die einzelnen elektronischen Komponenten intelligent, dynamisch versorgt, steuert und konfiguriert, (a) die Betriebszeit einer batteriebetriebenen Sende/Empfangseinheit verlängert, (b) bei gleichbleibender Betriebszeit die maximale Kapazität der Batterie und somit deren Volumen bzw. deren Gewicht verringert, und (c) die in der Sende/Empfangseinheit verbrauchte Verlustleistung reduziert und somit wiederum die aufwendigen Kühlkörper verkleinert werden, wodurch das gesamte Volumen eines die Sende/Empfangsschaltung enthaltenden Gerätes verringert werden kann.

Bevorzugte Ausführungsbeispiele der vorliegenden Erfindung werden nachfolgend bezugnehmend auf die beiliegenden Zeichnungen näher erläutert. Es zeigen:
- Fig. 1: ein Blockdiagramm eines Sende/Empfangsteils einer Sende/Empfangsschaltung gemäß einem Ausführungsbeispiel der vorliegenden Erfindung;
- Fig. 2: ein Blockdiagramm eines Leistungsverwaltungsmoduls zur Verwendung bei der Sende/Empfangsschaltung von Fig. 1; und
- Fig. 3: ein detaillierteres Blockdiagramm eines Leistungsverwaltungsmoduls.

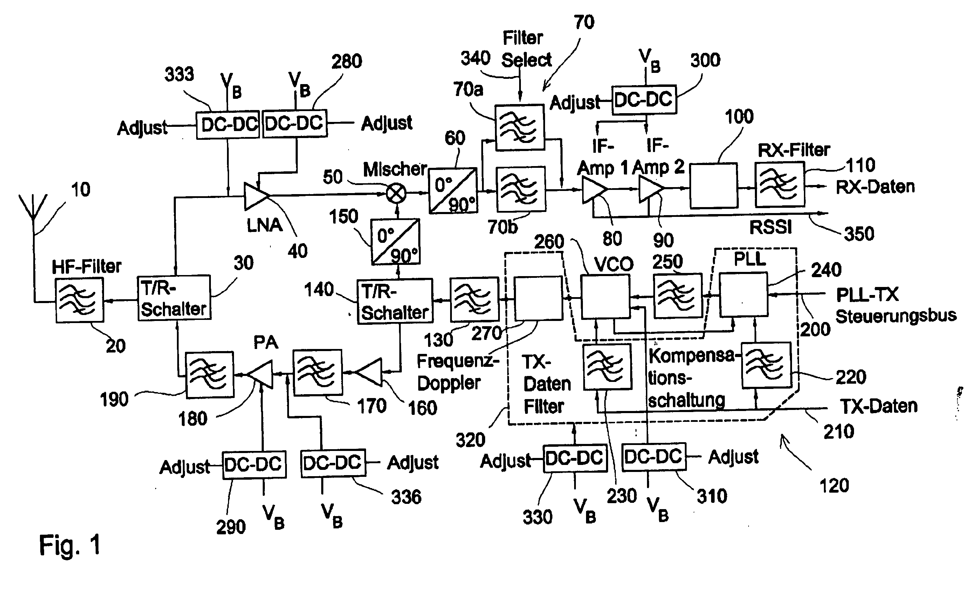

Wie es im folgenden beschrieben werden wird, wird eine erfindungsgemäße Sende/Empfangsschaltung entsprechend momentanen Betriebsparametern, wie z.B. Umgebungsbedingungen bzw. Empfangsbedingungen, oder entsprechend den sich daraus ergebenden Anforderungen intelligent versorgt, gesteuert und konfiguriert. Durch Ermittlung der Anforderungen an die Sende/Empfangsschaltung, wie z.B. einer hohen Anforderung an die Verstärkung und Rauschunterdrückung bei niedriger Eingangssignalstärke, wird immer ein minimaler Leistungsverbrauch gewährleistet. Gemäß den bezugnehmend auf Fig. 1-3 beschriebenen Ausführungsbeispielen wird diese Versorgung, Steuerung und Konfigurierung durch ein Leistungsverwaltungsmodul durchgeführt, das aus einer Steuerlogik, mehreren digital einstellbaren Linear- und Schaltreglern und einem variablen Taktgenerator besteht. Die Steuerlogik liest Signale, die die Anforderungen an das Gesamtsystem charakterisieren, bzw. die momentanen Betriebsparameter ein. Dies können beispielsweise RSSI-Signale, Signale vom Basisband-Prozessor der Sende/Empfangsschaltung oder Signale von einem Batterieverwaltungssystem sein, wie z.B. eine Ladezustandsanzeige. Entsprechend dieser Signale werden dann Steuerungssignale erzeugt und ausgegeben, die einen leistungsarmen, optimierten Betrieb der einzelnen Systemblöcke bzw. der einzelnen elektronischen Komponenten sowie des gesamten Systems sicherstellen. Diese Steuerungssignale regeln die Ausgangsspannungen der einstellbaren Linear- und Schaltregler und steuern somit die Versorgung und indirekt die Funktion der einzelnen Blöcke.

Bezugnehmend auf Fig. 1 wird nun der Sendeteil, der Empfangsteil und die Synthesizer-Schaltung einer Sende/Empfangsschaltung gemäß einem Ausführungsbeispiel der vorliegenden Erfindung beschrieben.

Entlang einer Empfangsrichtung sind bei der Sende/Empfangsschaltung von Fig. 1 eine Antenne 10, ein Hochfrequenzfilter (HF-Filter) 20, ein Sende/Empfangsschalter (T/R-Schalter) 30, ein rauscharmer Eingangsverstärker 40 (LNA; LNA = Low-Noise Amplifier), ein Zwischenfrequenzmischer 50 (IR-Mischer), ein Phasenschieber 60, ein ausgewähltes Zwischenfrequenzfilter 70, wie z.B. ein Zwischenfrequenzoberflächenwellen- (SAW-) Filter, zwei Zwischenfrequenzverstärker 80 und 90 (IF-Amp1 und IF-Amp2), eine Frequenzmodulationserfassungsschaltung bzw. ein FM-Detektor 100 und ein Empfangs-(RX-) Filter 110 in Reihe geschaltet.

Der Mischer 50 mischt das durch die Antenne 10 empfangene, durch das HF-Filter 20 gefilterte und durch den rauscharmen Eingangsverstärker LNA 40 verstärkte Signal während eines Empfangsvorgangs mit einem Signal, das derselbe von einer Synthesizer-Schaltung 120 empfängt. Die Synthesizerschaltung 120 ist mit dem Mischer 50 über ein Sende- (TX-) Filter 130, einen Sende/Empfangs- (T/R-) Schalter 140 und einen Phasenschieber 150, die in Reihe geschaltet sind, verbunden.

Entlang einer umgekehrten Richtung, d.h. einer Senderichtung, sind bei der Sende/Empfangsschaltung von Fig. 1 die Synthesizerschaltung 120, das Sendefilter 130, der T/R-Schalter 140, ein Vorverstärker 160, ein Sendefilter 170, ein Leistungsverstärker (PA; PA = Power Amplifier) 180, ein Ausgangsanpassungsfilter 190, der T/R-Schalter 30, das HF-Filter 20 und die Antenne 10 in Reihe geschaltet.

Die Synthesizerschaltung 120 umfaßt zwei Eingänge 200 und 210, d.h. einen Sende (TX-) Dateneingang 210 und einen PLL-TX-Steuerungsbuseingang. Die Synthesizerschaltung 120 umfaßt ferner eine Kompensationsschaltung 220, ein Sende-(TX-) Datenfilter 230, eine Phasenverriegelungsschaltung PLL 240 mit einem Phasendetektor, ein Schleifen- bzw. Loop-Filter 250, einen spannungsgesteuerten Oszillator 260 und einen Frequenzdoppler 270. Das Sendedatenfilter 230 und die Kompensationsschaltung 220 sind mit dem Sendedateneingang 210 verbunden, um über denselben die zu sendenden Daten zu empfangen. Der Oszillator 260 ist über das Schleifenfilter 250 und die PLL 240 mit der Kompensationsschaltung 220 verbunden. Der Oszillator 260 ist über einen Rückkopplungsweg ferner direkt mit der PLL 240 verbunden, um mit dem Loop-Filter 250 und der PLL einen Phasenregelkreis zu bilden. Die PLL 240 ist an einem ihrer Eingänge ferner mit dem PLL-TX-Steuerungsbuseingang 200 verbunden, über den dieselbe Eingangssteuersignale für den Phasenregelkreis erhält. Der Oszillator 260 ist ferner mit dem Sendedatenfilter 230 verbunden, um von demselben gefilterte Sendedaten zu empfangen. Der Ausgang des Oszillators 260 ist mit dem Frequenzdoppler 270 verbunden, der wiederum mit dem Sendefilter 130 verbunden ist und das Ausgangssignal der Synthesizerschaltung 120 ausgibt.

Die Sende/Empfangsschaltung von Fig. 1 wird von einer Batteriespannung V_{b} versorgt. Während einige Komponenten der Sende/Empfangsschaltung von Fig. 1 direkt durch die Batteriespannung V_{b} versorgt werden, werden einige Komponenten durch getrennte Spannungsregler versorgt. In dem vorliegenden Beispiel von Fig. 1 werden der rauscharme Eingangsverstärker LNA 40, der Leistungsverstärker bzw. die Sendeendstufe PA 180, die beiden Zwischenfrequenzverstärker IF-Amp1 + IF-Amp2 80 und 90, der spannungsgesteuerte Oszillator VCO 260 und die digitalen Komponenten der Synthesizerschaltung 120, d.h. der Frequenzdoppler 270, das TX-Datenfilter 230, die Kompensationsschaltung 220 und die PLL 240 mit dem Phasendetektor, durch getrennte Spannungsregler versorgt, die ihrerseits wiederum mit der Batteriespannung V_{b} verbunden sind. Insbesondere werden die Versorgungsspannung des rauscharmen Eingangsverstärkers LNA 40 von einem Spannungsregler 280, die Versorgungsspannung des Leistungsverstärkers 180 von einem Spannungsregler 290, die Versorgungsspannung der Zwischenfrequenzverstärker 80 und 90 von einem Spannungsregler 300, die Versorgungsspannung des Oszillators 260 von einem Spannungsregler 310 und die Versorgungsspannung der digitalen Komponenten 320 (d.h. innerhalb des Rahmens mit Strichlinie angezeigt) der digitalen Schaltung 120 von einem Spannungsregler 330 versorgt. Zusätzlich werden bei der in Fig. 1 gezeigten Schaltung die Biasspannung bzw. die Eingangsvorspannung des LNA 40 und des PA 180 über weitere Spannungsregler 333 bzw. 336 geregelt. Wie es zu sehen ist, sind die Spannungsregler 280-310 und 330-336 mit der Batteriespannung V_{b} verbunden und weisen jeweils einen Einstellungseingang (Adjust) auf. Der Adjust-Eingang der Spannungsregler 280-310 und 330-336 wird, wie es im folgenden beschrieben werden wird, verwendet, um die Versorgungsspannungen bzw. die Biasspannung und somit die Funktion der entsprechenden elektronischen Komponenten entsprechend bestimmten momentanen Betriebsparametern der Sende/Empfangsschaltung einzustellen.

Wie es bereits im vorhergehenden erwähnt wurde, ist ein ausgewähltes Filter 70 seriell in den Empfangsweg der Sende/Empfangsschaltung geschaltet. Hierzu ist es vorgesehen, daß eine Auswählerschaltung (nicht gezeigt) entsprechend bestimmten momentanen Betriebsparametern der Sende/Empfangsschaltung ein geeignetes Filter aus einer Mehrzahl von Filtern 70a und 70b auswählt. Diese Auswählerschaltung weist hierzu einen Eingang Filter Select 340 auf.

Anhand von Fig. 1 wird im folgenden beschrieben auf welche Art und Weise der Sende/Empfangsteil der Sende/Empfangsschaltung von Fig. 1 in Hinblick auf den Leistungsverbrauch gesteuert werden kann. Die Funktionsweise der Sende/Empfangsschaltung in Hinblick auf ihre Funktion als Sender und Empfänger geht für einen Fachmann auf diesem Gebiet aus dem Blockdiagramm von Fig. 1 und der vorhergehenden Beschreibung hervor und wird deshalb im weiteren nicht näher beschrieben.

Um die Sende/Empfangsschaltung von Fig. 1 immer mit der minimal notwendigen Verlustleistung zu betreiben, müssen möglichst viele Informationen über die an dieselbe gestellten Anforderung zur Verfügung stehen. Die bei dem vorliegenden Ausführungsbeispiel wichtigste Information stellt der RSSI-Wert, d.h. die Empfangssignalstärke, dar, die in dem vorliegenden Fall bei den Zwischenfrequenzverstärkern 80 und 90 abgelesen wird, wie es bei 350 dargestellt ist, und mit dessen Hilfe der rauscharme Eingangsverstärker LNA 40, der Oszillator VCO 260, der Leistungsverstärker 180 und die Zwischenfrequenzverstärker 80 und 90 gesteuert werden können, wie es im folgenden beschrieben werden wird.

Der LNA 40 kann in den meisten Fällen über seine Versorgungsspannung oder über die Eingangsvorspannung (Biasspannung) geregelt werden. So wird durch Reduzierung dieser Spannung die Verstärkung reduziert und die Verlustleistung verringert. Die Steuerung der Versorgungsspannung wird über den Spannungsregler 280 und die Steuerung der Biasspannung über den Spannungsregler 333 durchgeführt, die beide dynamisch einstellbare DC-DC-Wandler (Gleichspannungs-Gleichspannungs-Wandler) sind. Der Spannungsregler 280 wird ferner verwendet, um den LNA 40 in einen Standby-Modus bzw. einen Bereitschaftsmodus zu versetzen. Während des Standby-Modus wird der LNA 40 durch Unterbrechung der Versorgungsspannung desselben deaktiviert. Hierdurch werden Leckströme, die normalerweise bei dem eigentlichen Standby-Betrieb des LNA 40 entstehen würden, d.h. wenn derselbe direkt mit der Batteriespannung V_{b} verbunden wäre, vermieden. Zudem weist der Spannungsregler 280 einen eigenen Standby-Betriebszustand auf, bei dem derselbe nur einen minimalen Versorgungsstrom erfordert.

Ebenso wie der LNA 40 werden auch der Leistungsverstärker 180, die Zwischenfrequenzverstärker 80 und 90 und der Oszillator 260 von einem Spannungsregler 290, 300 bzw. 310 mit einer möglichst niedrigen Versorgungsspannung versorgt, wobei bei Reduzierung der Versorgungsspannung die Verlustleistung verringert und bei einem Standby-Modus Leckströme vermieden werden. Ein Vorteil der Verwendung von getrennten Spannungsreglern 280-310 und 330 für die einzelnen Komponenten besteht darin, daß die einzelnen Komponenten hierdurch voneinander entkoppelt sind. Versorgungsspannungsschwankungen, die durch starke Laständerungen, wie beispielsweise das Ein- oder Ausschalten einer oder mehrerer Komponenten, hervorgerufen werden würden, wenn alle Funktionsblöcke bzw. elektronischen Komponenten ohne Regler direkt mit der gleichen Versorgungsspannung verbunden wären, werden durch diese Entkopplung vermieden. Da diese Schwankungen auch die eigentlichen Empfangs- und Sendesignale beeinflussen, wird folglich das Signalrauschleistungsverhältnis verbessert.

Der Oszillator VCO 260 kann, wie der LNA 40 auch, direkt über seine Versorgungsspannung gesteuert werden. Bei einem starken Eingangssignal, d.h. einem hohen RSSI-Wert, des Empfängerteils kann ein höheres Phasenrauschen des Oszillators 260 toleriert werden. Störer bzw. Störfrequenzen werden hierbei zwar stärker in das Empfangsband gemischt, jedoch ist dies bei ausreichend hohem Pegel des gewünschten Signals unbedenklich.

Auch der Leistungsverstärker bzw. die Sendeendstufe kann mittels des RSSI-Werts über seine Versorgungsspannung, die durch den Spannungsregler 290 geliefert wird, oder über seine Biasspannung, die durch den Spannungsregler 336 geliefert wird, gesteuert werden. Die Überlegung, die Empfangssignalstärke zu verwenden, um die Ausgangsverstärkung zu regeln, besteht darin, daß angenommen wird, daß ein hoher RSSI-Wert auf eine gute Funkverbindung zur Gegenstation bzw. Basisstation (nicht gezeigt) schließen läßt, und folglich die Sendeleistung reduziert werden kann.

Durch eine zweite RSSI-Messung vor dem Zwischenfrequenzfilter 70 und einen Vergleich mit dem eigentlichen RSSI-Wert, der nach diesem Filter 70 gemessen wird, und einen Vergleich der beiden Werte kann auf das Vorhandensein von Störern bzw. Störfrequenzen geschlossen werden. Abhängig von der Differenz der beiden Werte kann über die Steuerungsleitung Filter Select 340 ein breitbandigeres Filter 70 aus der Mehrzahl von Filtern 70a und 70b mit einer geringeren Einfügedämpfung ausgewählt werden, wie es im folgenden beschrieben werden wird, wodurch die anschließende Verstärkung und der Leistungsverbrauch verringert werden kann.

Die Versorgungsspannung der digitalen Komponenten 320 des Synthesizers 120, d.h. des Frequenzdopplers 270, des Sendedatenfilters 230, der Kompensationsschaltung 220 und der Phasenverriegelungsschaltung 240, können nicht direkt verringert werden, da ab einer gewissen Mindestspannung die einwandfreie Funktion einer digitalen Schaltung nicht mehr garantiert werden kann. Wie es im folgenden beschrieben werden wird, wird bei zulässiger Performanceminderung bzw. Leistungsfähigkeitsminderung der Takt für die digitalen Komponenten reduziert, da bei einem reduzierten Takt die durch eine Reduzierung der Versorgungsspannung hervorgerufene Schaltverzögerung aufgrund der geringeren Verarbeitungsgeschwindigkeit tolerierbar ist.

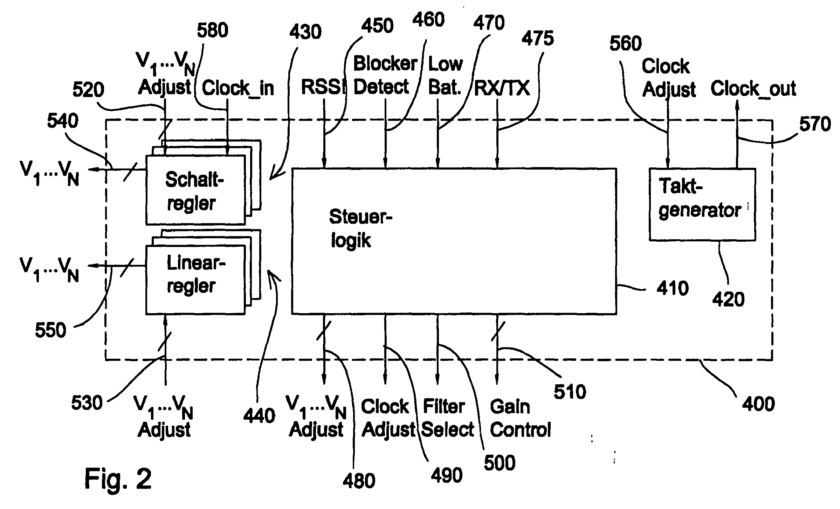

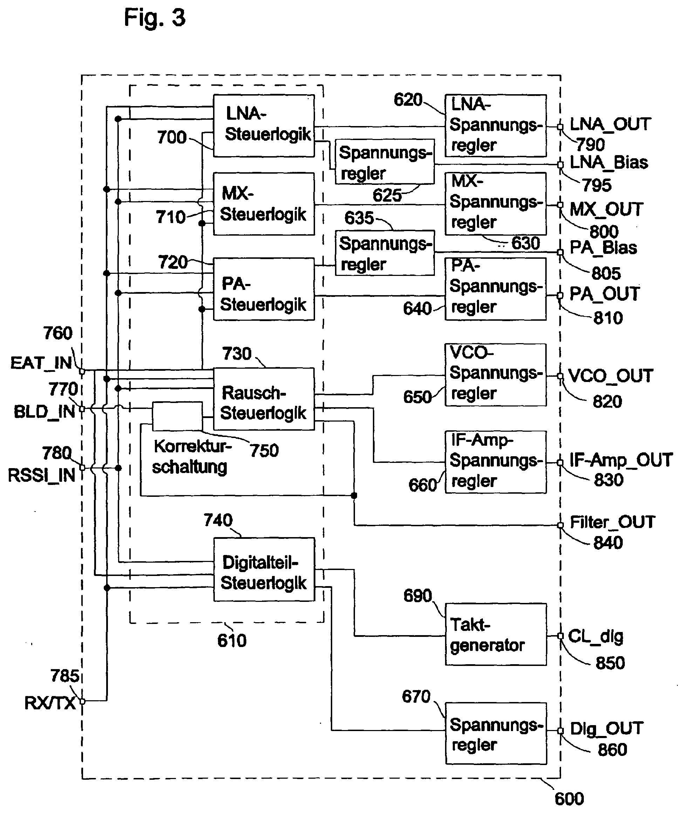

Es wird darauf hingewiesen, daß es weitere Möglichkeiten bzw. Parameter gibt, um den Leistungsverbrauch der Schaltung von fig. 1 zu verringern. Bevor bezugnehmend auf Fig. 2 und 3 die Spannungsverwaltung der Sende/Empfangsschaltung von Fig. 1 beschrieben werden wird, wird darauf hingewiesen, daß die in Fig. 1 gezeigte Sende/Empfangsschaltung lediglich ein spezielles Ausführungsbeispiel der vorliegenden Erfindung darstellt, und daß die Sende/Empfangsschaltung von Fig. 1 lediglich deshalb so detailliert dargestellt ist, um die Grundsätze der vorliegenden Erfindung besser veranschaulichen zu können. In Hinblick auf die folgende Erörterung der Spannungsverwaltung dieser Sende/Empfangsschaltung wird darauf hingewiesen, daß ferner weitere elektronische Komponenten außer dem LNA 40, dem Leistungsverstärker 80, den Zwischenfrequenzverstärkern 80 und 90, dem Oszillator 260 und den digitalen Komponenten 320 über einen Spannungsregler versorgt werden können. So könnte beispielsweise auch die Versorgung des Mischers bei einem hohen Eingangssignal ebenfalls verringert und somit die Leistungsaufnahme desselben verringert werden.

Es wird nun auf Fig. 2 Bezug genommen, das ein Leistungsverwaltungsmodul zur Durchführung der Leistungsverwaltung für die Sende/Empfangsschaltung von Fig. 1 zeigt. Wie es in Fig. 2 gezeigt ist, umfaßt das Leistungsverwaltungsmodul 400 eine Logikschaltung 410, einen Taktgenerator 420, eine Mehrzahl von Schaltreglern 430 und eine Mehrzahl von Linearreglern 440. Die Schaltregler 430 und Linearregler 440 entsprechen den in Fig. 1 gezeigten Spannungsreglern 280-310 und 330-336, wobei darauf hingewiesen wird, daß bei der Wahl, welcher Spannungsregler 280-310 und 330-336 ein Schaltregler oder ein Linearregler ist, vor allem auf die Effizienz und das Ausgangsrauschen sowie das Einschwingverhalten geachtet werden muß. Da sich Linearregler durch ein geringes Ausgangsrauschen auszeichnen, aber nur effizient sind, wenn die Differenz zwischen Eingangs- und Ausgangsspannung gering ist, und andererseits Schaltregler auch bei größeren Differenzen zwischen Ein- und Ausgangsspannung äußerst effizient sind, aber durch die internen Schaltvorgänge ein gewisses Ausgangsrauschen erzeugen, sind die Spannungsregler 280 und 310 vorzugsweise als Linearregler ausgeführt, da bei denselben auf ein geringes Rauschen der Versorgungsspannung zu achten ist. Dieselbe Betrachtung wird zur Auswahl der anderen DC-DC-Wandler angewendet.

Wie es zu sehen ist, weist die Steuerlogik 410 von Fig. 2 vier Eingänge 450, 460, 470 und 475 auf, bei denen die Steuerlogik 410 vier verschiedene momentane Betriebsparameter, d.h. die Empfangssignalstärke RSSI, Empfangssignalstörinformationen (Blocker Detect), Batterieladezustandsinformationen (Low. Bat) und Informationen darüber, ob ein Sende- oder ein Empfangsvorgang vorliegt, empfängt, die im folgenden näher erläutert werden. Auf der Grundlage der empfangenen momentanen Betriebsparameter erzeugt die Steuerlogik 410 entsprechende Steuersignale, die dieselbe an einer Mehrzahl von Ausgängen 480, zwei Ausgängen 490 und 500 und einer Mehrzahl von Ausgängen 510 ausgibt. Die Mehrzahl von Ausgängen 480 und 510 sind mit der Mehrzahl von Spannungsreglern 430 und 440 an deren entsprechenden Eingängen 520 bzw. 530 verbunden. Auf diese Weise kann die Steuerlogik 410, wie es im folgenden bezugnehmend auf Fig. 3 detaillierter beschrieben wird, die Versorgungsspannungen bzw. die Biasspannungen von elektronischem Komponenten der Sende/Empfangsschaltung, die mit Ausgängen 540 und 550 der Mehrzahl von Spannungsreglern 430 bzw. 440 verbunden sind, derart einstellen, daß der Gesamtleistungsverbrauch der Sende/Empfangsschaltung entsprechend den momentanen Betriebsparametern verringert oder minimiert wird. Der Ausgang 490 (Clock Adjust = Takteinstellung) ist mit einem Eingang 560 des Taktgenerators 420 verbunden, der an einem Ausgang 570 einen Takt für die digitalen Schaltungskomponenten der Sende/Empfangsschaltung (320 in Fig. 1) ausgibt. Die Mehrzahl von Schaltreglern 430 weisen neben dem Steuereingang 520 ferner einen Eingang Clock_in 580 auf, über den dieselben einen internen Takt zur Steuerung der Ausgangsspannung erhalten. An dem Ausgang 500 gibt die Steuerlogik 410 ein Signal aus, das, wie es im folgenden detaillierter erläutert wird, abhängig von den Eingangssignalen an den Eingängen 450-475 aus der Mehrzahl von Filtern 70a und 70b (Fig. 1) ein tolerierbares Filter mit geringer Einfügedämpfung auswählt.

Bevor bezugnehmend auf Fig. 3 die Funktionsweise der Steuerlogik 410 anhand eines speziellen Beispiels detaillierter beschrieben werden wird, wird darauf hingewiesen, daß, obwohl in Fig. 1 lediglich sieben Spannungsregler gezeigt sind, das Leistungsverwaltungsmodul 400 mehr oder weniger Spannungsregler umfassen kann, die mit geeigneten elektronischen Komponenten der Sende/Empfangsschaltung verbunden sind.

Bezugnehmend auf Fig. 3 wird die Funktionsweise eines speziellen Beispiels des Spannungsverwaltungsmoduls 400 von Fig. 2 detaillierter beschrieben, wobei auf jeweilige Komponenten von Fig. 1 Bezug genommen werden wird. Fig. 3 zeigt ein Spannungsverwaltungsmodul 600 mit einer Strichlinie, das eine Steuerlogik 610, die mit einer Strichpunktlinie gezeigt ist, eine Mehrzahl von Spannungsreglern 620, 625, 630, 635, 640, 650, 660 und 670 und einen Taktgenerator 690 aufweist. Die Steuerlogik 610 umfaßt mehrere Steuerlogikeinheiten 700, 710, 720, 730 und 740 und eine Korrekturschaltung 750. Zur Durchführung der Spannungsverwaltung umfaßt das Spannungsverwaltungsmodul 600 von Fig. 3 vier Eingänge Bat_IN, BLD_IN, RSSI_IN und RX/TX 760, 770, 780 und 785. Das Spannungsverwaltungsmodul 600 umfaßt ferner zehn Ausgänge 790, 795, 800, 805, 810, 820, 830, 840, 850 und 860.

Im folgenden wird nun die Funktionsweise der Steuerlogik 610 sowie die Verdrahtung des Spannungsverwaltungsmoduls 600 und die Verbindung der Ausgänge 790-860 mit jeweiligen elektronischen Komponenten der Sende/Empfangsschaltung von Fig. 1 beschrieben.

Die LNA-Steuerlogikeinheit 700 ist an einem Eingang mit dem Eingang RSSI_IN des Spannungsverwaltungsmoduls 600 verbunden, um einen Wert für die Empfangssignalstärke zu empfangen. Die LNA-Steuerlogikeinheit 700 ist an einem Ausgang mit dem LNA-Spannungsregler 620 verbunden, der wiederum mit dem Ausgang LNA_OUT verbunden ist und an demselben die Versorgungsspannung an den rauscharmen Eingangsverstärker LNA 40 von Fig. 1 ausgibt. Die LNA-Steuerlogikeinheit 700 ist an einem weiteren Ausgang mit dem Spannungsregler 625 verbunden, der wiederum mit dem Ausgang LNA_Bias verbunden ist und an demselben die Biasspannung an den rauscharmen Eingangsverstärker LNA 40 ausgibt. Die Steuerlogikeinheit 700 ist entworfen, um abhängig von dem empfangenen RSSI-Wert derartige Steuersignale an die Spannungsregler 620 und 625 auszugeben, daß dieselben die Versorgungsspannung und die Biasspannung für den LNA 40 verringern, wenn der RSSI-Wert zunimmt. Hierdurch wird berücksichtigt, daß eine hohe Eingangssignalstärke eine geringere Verstärkung erfordert. Folglich wird zur Einsparung des Leistungsverbrauchs durch Verringerung der Versorgungsspannung und der Biasspannung die Verstärkung reduziert und die Verlustleistung verringert. In dem vorliegenden Beispiel werden die Versorgungsspannung und die Biasspannung derart verringert, daß sich ein möglichst niedriger, aber ausreichender Verstärkungswert bei gleichzeitig niedrigem Rauschen ergibt. Es kann jedoch vorgesehen sein, daß entweder die Versorgungsspannung oder die Biasspannung des LNA 40 gesteuert wird und nicht beide, wobei in diesem Fall entweder der Spannungsregler 625 (bzw. 333 in Fig. 1) oder der Spannugsregler 620 (bzw. 280 in Fig. 1) fehlen könnte.

Die Steuerlogikeinheit 700 ist ferner entworfen, um den LNA in einen Standby-Modus zu versetzen, z.B. falls sich die Sende/Empfangsschaltung in einem Sendevorgang befindet. Hierzu ist die LNA-Steuerlogikeinheit 700 mit dem Eingang RX/TX 785 verbunden, an dem dieselbe ein Signal von einem Basisband-Prozessor (nicht gezeigt) empfängt, das anzeigt, ob ein Sende- oder Empfangsvorgang vorliegt. Falls die LNA-Steuerlogikeinheit 700 den LNA in einen Standby-Modus versetzt, gibt die LNA-Steuerlogikeinheit 700 ein entsprechendes Steuersignal an den Spannungsregler 620 aus, der daraufhin an seinem Ausgang 0 Volt erzeugt und sich dann in einem eigenen Standby- oder Bereitschafts-Betriebszustand befindet, wobei derselbe in diesen Bereitschafts-Betriebszustand nur einen minimalen Versorgungsstrom benötigt. Folglich wird mit Hilfe des Spannungsreglers 620 der LNA 40 (Fig. 1) durch Unterbrechung der Versorgungsspannung deaktiviert. Der Vorteil besteht darin, daß alle Leckströme, die normalerweise im eigentlichen Standby-Betrieb des LNAs 40 mit ununterbrochener Versorgungsspannung entstehen würden, vermieden werden.

Wie zur Spannungsverwaltung des LNA 40 ist bei dem Spannungsverwaltungsmodul 600 von Fig. 3 eine MX-Steuerlogikeinheit 710 vorgesehen, die an einem Eingang mit dem Eingang RSSI_IN 780 verbunden ist, um den RSSI-Wert zu empfangen, und an einem Ausgang mit dem MX-Spannungsregler 630 verbunden ist. Der MX-Spannungsregler 630 ist wiederum über den Ausgang MX_OUT 800 mit dem Zwischenfrequenzmischer 50 verbunden. Die MX-Steuerlogikeinheit 710 ist entworfen, um über den MX-Spannungsregler 630 die Versorgungsspannung des Mischers 50 entsprechend dem RSSI-Wert einzustellen. Die MX-Steuerlogikeinheit 710 verringert die Versorgungsspannung des Mischers 50 bei einem höheren Eingangssignalstärkewert. Hierzu gibt die Steuerlogik 710 ein entsprechendes Steuersignal an den Spannungsregler 630 aus. Folglich sorgt die MX-Steuerlogikeinheit durch Verringerung der Versorgungsspannung für den Mischer 50 für eine Reduzierung der Verstärkung und der Leistungsaufnahme des Mischers 50 und somit für eine Verringerung des gesamten Leistungsverbrauchs. Die MX-Steuerlogik 710 übernimmt ferner die Aufgabe, den Mischer 50 bei Vorliegen eines Sendevorgangs in einen Standby-Modus zu versetzen, wie es im vorhergehenden bezugnehmend auf die LNA-Steuerlogikeinheit beschrieben worden ist. Hierzu ist die Steuerlogikeinheit 710 wie die LNA-Steuerlogikeinheit 700 zusätzlich zu dem Eingang RSSI_IN mit dem Eingang RX/TX verbunden, um Informationen über das Vorliegen eines Empfangs- oder Sendevorgangs zu erhalten.

Zur Leistungsverwaltung des Leistungsverstärkers 180 empfängt die PA-Steuerlogikeinheit 720 an einem Eingang von dem Eingang RSSI_IN 780 den RSSI-Wert, um an zwei Ausgängen Steuersignale an den PA-Spannungsregler 640 bzw. den Spannungsregler 635 auszugeben. Der PA-Spannungsregler 640 ist über den Ausgang PA_OUT 810 mit dem Leistungsverstärker PA 180 verbunden, um demselben entsprechend dem Steuersignal von der PA-Steuerlogikeinheit 720 die Versorgungsspannung zuzuführen. Der Spannungsregler 635 ist über den Ausgang PA_Bias 805 mit dem Leistungsverstärker PA 180 verbunden, um demselben entsprechend dem Steuersignal von der PA-Steuerlogikeinheit 720 die Biasspannung zuzuführen. Entsprechend der LNA-Steuerlogikeinheit 700 ist die PA-Steuerlogikeinheit 720 entworfen, um die Spannungsregler 635 und 640 über die Steuersignale derart zu steuern, daß dem Leistungsverstärker 180 bei höherem RSSI-Wert eine niedrigere Versorgungsspannung und/oder Biasspannung zugeführt wird. Dieser Funktionsweise liegt die Annahme zugrunde, daß ein hoher RSSI-Wert auf eine gute Funkverbindung zur Gegenstation bzw. Basisstation (nicht gezeigt) schließen läßt, und folglich die Verstärkung bzw. die Sendeleistung reduziert werden kann. Wie bezüglich der LNA-Steuerlogikeinheit 700 bereits angemerkt kann auch bei der Leistungsverwaltung des PA 180 auch lediglich der Spannungsregler 635 (bzw. 336 in Fig. 1) oder der Spannungsregler 640 (bzw. 290 in Fig. 1) vorgesehen sein, um entweder die Versorgungspannung oder die Biasspannung zu regeln. Die PA-Steuerlogikeinheit 720 übernimmt ähnlich den vorhergehenden Steuerlogikeinheiten 700 und 710 ferner die Aufgabe, den PA 180 bei Vorliegen eines Empfangsvorgangs in einen Standby-Modus zu versetzen. Hierzu ist die Steuerlogikeinheit 720 zusätzlich zu dem Eingang RSSI_IN mit dem Eingang RX/TX verbunden, um Informationen über das Vorliegen eines Empfangs- oder Sendevorgangs zu erhalten.

Die Steuerlogikeinheit 730 ist mit zwei Eingängen des Spannungsverwaltungsmoduls 600, dem BLD_IN und dem RSSI_IN, verbunden. Über den Eingang BLD_IN empfängt die Rauschsteuerlogikeinheit 730 einen zweiten RSSI-Wert, der vor dem Zwischenfrequenzfilter 70 gemessen wird. Zwischen der Rauschsteuerlogikeinheit 730 und den Eingang BLD_IN ist eine Korrekturschaltung 750 geschaltet, die den zweiten RSSI-Wert mit der Einfügedämpfung des momentan ausgewählten Filters 70 korrigiert. Die Rauschsteuerlogikeinheit 730 ist entworfen, um basierend auf einem Vergleich dieser beiden RSSI-Werte auf das Vorhandensein von Störern in den Eingangsdaten zu schließen (BLD = Blocker Detect). Nachbarkanalstörer würden durch das Filter 70 unterdrückt werden und somit zu unterschiedlichen Werten der Signalleistung vor und nach dem Filter führen. Bei Gleichheit des korrigierten RSSI-Werts vor dem Filter 70 und dem Wert von RSSI nach dem Filter 70 kann ersehen werden, daß keine Störer vorhanden sind. In einem solchen Fall ist ein noch höheres Phasenrauschen tolerierbar, wie es durch Verringerung der Versorgungsspannung des VCOs und damit durch Verlustleistungsreduzierung entsteht. Die Rauschsteuerlogikeinheit 730 ist an einem Ausgang mit dem VCO-Spannungsregler 650 verbunden, der wiederum über den Ausgang VCO_OUT 820 mit dem Oszillator VCO verbunden ist. Die Rauschsteuerlogikeinheit 730 gibt ein derartiges Steuersignal an den Spannungsregler 650 aus, daß der Oszillator durch den Spannungsregler 650 mit einer niedrigeren Versorgungsspannung versorgt wird, wenn die beiden RSSI-Werte im wesentlichen gleich sind bzw. ein höheres Phasenrauschen tolerierbar ist, und mit einer höheren Versorgungsspannung versorgt wird, falls die beiden RSSI-Werte weiter auseinander liegen. Die Rauschsteuerlogikeinheit 730 ist überdies entworfen, um die Versorgungsspannung zu dem VCO ferner dann zu verringern, falls der RSSI-Wert zunimmt, da bei einer starken Signaleingangsstärke allgemein ein höheres Phasenrauschen des Oszillators toleriert werden kann. Hierbei werden zwar Störer stärker ins Empfangsband gemischt, was bei ausreichend hohem Pegel des gewünschten Signals jedoch unbedenklich ist. Die Rauschsteuerlogikeinheit 730 ist ferner entworfen, um basierend auf dem Vergleich zwischen den beiden RSSI-Werten ein Steuersignal an den Ausgang 840 Filter_Out, der mit einer Auswählerschaltung (nicht gezeigt in Fig. 1) verbunden ist, derart auszugeben, daß ein breitbandigeres Filter in den Empfangspfad der Sende/Empfangsschaltung geschaltet wird, wenn die RSSI-Werte im wesentlichen übereinstimmen. Da ein breitbandigeres Filter eine geringere Einfügedämpfung aufweist, kann hierdurch ebenfalls der Leistungsverbrauch verringert werden. Um die Korrekturschaltung 750 über einen Filterwechsel und damit über eine Änderung des notwendigen Korrekturfaktors für den zweiten RSSI-Wert in Kenntnis zu setzen, ist der Ausgang der Rauschsteuerlogikeinheit 730, der mit Ausgang Filter_OUT verbunden ist, ferner mit einem Eingang der Korrekturschaltung 750 verbunden. Die Rauschsteuerlogikeinheit 730 ist an einem Ausgang ferner mit dem IF-Amp-Spannungsregler 660 verbunden, der über den Ausgang IF-Amp_OUT 830 mit den beiden Zwischenfrequenzverstärkern 80 und 90 (Fig. 1) verbunden ist. Die Rauschsteuerlogikeinheit 730 ist entworfen, um die Versorgungsspannung der Zwischenfrequenzverstärker 80 und 90 in dem Fall zu reduzieren, daß die RSSI-Werte im wesentlichen gleich sind, da wegen des in diesem Fall möglichen breitbandigeren Filters mit geringerer Einfügedämpfung eine geringere Verstärkung der Zwischenfrequenzverstärker 80 und 90 ermöglicht wird. Hierzu gibt die Rauschsteuerlogikeinheit 730 wiederum ein geeignetes Steuersignal an den Spannungsregler 660 aus, und es wird hierdurch wiederum Verlustleistung eingespart. Wie die im vorhergehenden beschriebenen Steuerlogikeinheiten 700-720 ist auch die Steuerlogikeinheit 730 mit dem Eingang RX/TX 785 verbunden, um Informationen darüber zu erhalten, ob momentan ein Sende- oder Empfangsvorgang vorliegt, wobei beispielsweise die Versorgungsspannung des IF-Amp-Spannungsreglers 660 bei Vorliegen eines Sendevorgangs abgeschaltet werden kann.

Die Steuerlogikeinheit 740 ist mit den Eingängen RSSI_IN und RX/TX verbunden, und ist entworfen, um basierend auf dem RSSI-Wert und den Informationen von dem Basisband-Prozessor die Versorgungsspannung und den Takt für die digitalen Komponenten 320, d.h. die PLL 240, den Frequenzdoppler 270, die Kompensationsschaltung 220 und das TX-Datenfilter 230, einzustellen. Hierzu ist die Digitalteilsteuerlogikeinheit 740 an einem ersten Ausgang mit dem Spannungsregler 670 und an einem zweiten Ausgang mit dem Taktgenerator 690 verbunden. Bei zulässiger Leistungsfähigkeitsverringerung, wie z.B. bei einem Wechsel von einem Betrieb, der eine hohe Informationsdichte bzw. Baudrate erfordert, wie z.B. bei einer Sprachübertragung, in einen Betrieb mit geringer Baudrate, wie z.B. bei Fax-Datenübertragungen, sendet die Digitalteilsteuerlogikeinheit 740 ein entsprechendes Steuersignal an den Taktgenerator 690, das angibt, daß die digitalen Komponenten mit einem reduzierten Takt versorgt werden können. Der Taktgenerator 690 gibt in diesem Fall entsprechend dem Steuersignal von der Digitalteilsteuerlogikeinheit 740 einen Takt mit niedrigerer Geschwindigkeit für die digitalen Komponenten an dem Ausgang CL_dig 850 aus. Bei reduzierter Taktgeschwindigkeit wiederum kann auch die Versorgungsspannung verringert werden, da die dadurch hervorgerufene Schaltverzögerung aufgrund der geringeren Verarbeitungsgeschwindigkeit tolerierbar ist. Folglich ist die Steuerlogikeinheit 740 entworfen, in diesem Fall ein derartiges Steuersignal an den Spannungsregler 670 zu senden, daß der Digitalteil 320 (Fig. 1) der Synthesizerschaltung 120 von dem Spannungsregler 670 über den Ausgang Dig_OUT 860 mit einer niedrigeren Versorgungsspannung versorgt wird, wodurch wiederum Verlustleistung eingespart wird. Wie die im vorhergehenden beschriebenen Steuerlogikeinheiten 700-730 ist auch die Steuerlogikeinheit 740 entworfen, um abhängig von den von dem Basisbandprozessor erhaltenen Informationen darüber, ob momentan ein Sende- oder Empfangsvorgang oder keiner der beiden vorliegt, die Versorgungsspannung von eventuell möglichen einzelnen Komponenten abzuschalten.

Der Eingang BAT_IN 760 ist mit jeder Steuerlogikeinheit 700-740 verbunden, um jeder Steuerlogikeinheit 700-740 Batterieladezustandsinformationen zuzuführen. Die Steuerlogikeinheiten 700-740 sind entworfen, um diese Informationen über den Ladezustand der Batterie (nicht gezeigt) zusätzlich zu den im vorhergehenden erwähnten Informationen zu verwenden, um beispielsweise unter Einbußen der Güte der Empfangsdaten (RX-Daten) einen besonders verlustleistungsarmen Betriebsmodus zu bewirken, um die wichtigsten Funktionen der Sende/Empfangsschaltung auch bei beinahe leerem Akku noch ausführen zu können.

Folglich zeigt Fig. 3 ein Leistungsverwaltungsmodul, das aus einer Steuerlogik, mehreren digital einstellbaren Linear- und Schaltreglern und einem variablen Taktgenerator besteht. Die Steuerlogik liest Signale, die die Anforderungen an das Gesamtsystem charakterisieren ein. Dies sind in dem vorliegenden Fall die RSSI-Signale (RSSI, Blockerdetekt), Signale vom Basisband-Prozessor der Sende/Empfangsschaltung oder Signale von dem Batterieverwaltungssystem, wie z.B. eine Ladezustandsanzeige oder eine Anzeige, daß die Ladekapazität einen bestimmten Schwellenwert unterschritten hat. Die Logik muß diese Signale verarbeiten und Steuersignale generieren, die dann an die einstellbaren Spannungsregler weitergeleitet werden und somit die Ausgangsspannungen derselben steuern. Folglich erfolgt eine Einstellung der Versorgungsspannung und hiermit indirekt der Steuerung der Funktion der einzelnen Blöcke. Zusätzlich werden noch Signale zur Einstellung der Taktfrequenz, zur Auswahl der Filter und der Regelung der Verstärkungen entsprechend den gemessenen Eingangssignalen der Steuerlogik erzeugt. Auf diese Weise kann ein leistungsarmer, optimierter Betrieb der einzelnen Systemblöcke bzw. elektronischen Komponenten sowie des gesamten Systems gewährleistet werden.

Es wird darauf hingewiesen, daß im vorhergehenden die vorliegende Erfindung bezugnehmend auf ein spezielles Ausführungsbeispiel beschrieben worden ist. Die genaue Anzahl der Eingänge, sowie die genaue Anzahl der Ausgänge der Steuerlogik können anders gewählt werden. Zusätzlich zu den in Fig. 2 und Fig. 3 gezeigten Eingängen kann die Steuerlogik beispielsweise weitere Eingänge aufweisen, durch die dieselbe weitere Signale von dem Basisband-Prozessor empfängt. Zudem kann die Anzahl von Ausgängen variieren, wobei weitere oder weniger Parameter entsprechend den momentanen Betreibsparametern gesteuert werden können. Die vorliegende Erfindung ist auf Sende/Empfangsschaltungen für schnurlose Telephone, Datenübertragungsgeräte, wie z.B. Datenübertragungsgeräte des DECT- und Bluetooth-Standards, Mobiltelephone, wie z.B. GSM-, DCS-, PCS-Mobiltelephone, und ISM-Band-Datenübertragungen anwendbar.

Bezugnehmend auf die Steuerlogikeinheiten von Fig. 3 wird darauf hingewiesen, daß dieselben durch den Schaltungsentwurf derart entworfen sind, um die im vorhergehende beschriebene Funktionsweise auszuführen, oder daß dieselben zusätzlich jeweils eine Nachschlagtabelle aufweisen, in der Antworten auf bestimmte Eingangssignale zu den Steuerlogikeinheiten gespeichert sind. Es wird ferner darauf hingewiesen, daß die Steuerlogik unter Verwendung einer einzigen Nachschlagtabelle gebildet sein kann, in der jeweils ein Satz von Werten für jeden Spannungsregler, für den Taktgenerator und die Filterauswählerschaltung für jeden Satz von Eingangswerten an den Eingängen der Steuerlogik bzw. des Leistungsverwaltungsmoduls gespeichert ist.

Es wird ferner darauf hingewiesen, daß es für die vorliegende Erfindung nicht wesentlich ist, ob die Steuerlogikeinheiten analog oder digital aufgebaut sind. Vorzugsweise sind die Steuerlogikeinheiten jedoch digital aufgebaut, wobei digitale Steuersignale von den Steuerlogikeinheiten ausgegeben werden.

Es wird ferner darauf hingewiesen, daß die genaue Gestaltung des Sende/Empfangsteils von Fig. 1 für die vorliegende Erfindung nicht wesentlich ist. Zudem können die einzelnen Komponenten anders ausgeführt sein, wie z.B. die Spannungsregler.

## Patentansprüche

1. Sende/Empfangsschaltung mit
einer Mehrzahl von Zwischenfrequenzfiltern (70), von denen jedes eine unterschiedliche Durchlaßbandbreite und Einfügedämpfung aufweist;
einer Steuerlogik (410; 610), die angepaßt ist, um abhängig von Nachbarkanal-Störinformationen eines der Mehrzahl von Zwischenfrequenzfiltern (70) zur Zwischenfrequenzfilterung auszuwählen; und
einer Einrichtung zum Erfassen von Nachbarkanal-Störinformationen mit
einer Einrichtung zum Erfassen eines Empfangssignalstärkewertes vor dem ausgewählten Zwischenfrequenzfilter;
einer Einrichtung zum Erfassen eines Empfangssignalstärkewertes nach dem ausgewählten Zwischenfrequenzfilter; und
einer Einrichtung zum Vergleichen der beiden Empfangssignalstärkewerte vor und nach dem ausgewählten Zwischenfrequenzfilter, um die Nachbarkanal-Störinformationen zu erhalten, unter Berücksichtigung der Einfügedämpfung des ausgewählten Filters, wobei die Einrichtung zum Vergleichen eine Korrektureinrichtung zum Korrigieren des Empfangssignalstärkewertes vor dem ausgewählten Zwischenfrequenzfilter mit der Einfügedämpfung des ausgewählten Zwischenfrequenzfilters aufweist.

2. Sende/Empfangsschaltung gemäß Anspruch 1, bei der die Steuerlogik (410; 610) angepaßt ist, um abhängig von der Auswahl die Zwischenfrequenzfilter (70a, 70b) zu aktivieren oder deaktivieren.

3. Sende/Empfangsschaltung gemäß einem der Ansprüche 1 oder 2, die ferner folgendes Merkmal aufweist:
einen Zwischenfrequenzmischer, dessen Verstärkung über eine Versorgungsspannung steuerbar ist,
wobei die Steuerlogik (410; 610) ferner angepaßt ist, um abhängig von einem Empfangssignalstärkewert die Versorgungsspannung des Zwischenfrequenzmischers zu steuern.

4. Sende/Empfangsschaltung gemäß einem der Ansprüche 1 bis 3, die ferner folgende Merkmale aufweist:
eine digitale elektronische Komponente (320);
einen Spannungsregler, der mit der digitalen elektronischen Komponente verbunden ist, zum Versorgen der digitalen elektronischen Komponente mit einer Versorgungsspannung; und
einen Taktgenerator, der mit der digitalen elektronischen Komponente verbunden ist, zum Zuführen eines Takts zu der digitalen elektronischen Komponente,
wobei die Steuerlogik (410; 610) ferner angepaßt ist, um den Taktgenerator und den Spannungsregler derart zu steuern, daß bei Wechsel von einem Betrieb, der einen erste Baudrate erfordert, die kleiner als die erste ist, die Versorgungsspannung und die Taktgeschwindigkeit reduziert wird.

5. Sende/Empfangsschaltung gemäß einem der Ansprüche 1 bis 4, die ferner folgendes Merkmal aufweist:
eine Mehrzahl von weiteren elektronischen Komponenten (40, 80, 90, 320, 180), wobei die elektronischen Komponenten verbunden sind, um zum Senden und Empfangen von Daten zusammenzuwirken, wobei die Komponenten (40, 80, 90, 260, 320, 180) durch Steuersignale steuerbar sind,
wobei die Steuerlogik (410; 610) mit der Mehrzahl von elektrischen Komponenten (40, 80, 90, 260, 320, 180) verbunden ist, zum Überwachen von momentanen Betriebsparametern der Sende/Empfangsschaltung und zum Ausgeben von Steuersignalen an die Mehrzahl von Komponenten (40, 80, 90, 260, 320, 180) abhängig von den momentanen Betriebsparametern, wobei die Steuersignale bei den Komponenten (40, 80, 90, 260, 320, 180) zumindest zwei Parameter aus einer Gruppe von Parametern umfassen, die aus der Versorgungsspannung, der Verstärkung, einer Filterauswahl und der Taktgeschwindigkeit, in der wenigstens eine der Komponenten (320) betrieben wird, besteht.

6. Sende/Empfangsschaltung gemäß Anspruch 5, bei der die momentanen Betriebsparameter einen Empfangssignalstärkewert, Batterieladezustandsinformationen, Empfangssignalstörinformationen und Informationen darüber umfassen, ob ein Sende- oder Empfangsvorgang vorliegt.

7. Sende/Empfangsschaltung gemäß Anspruch 6, bei der die Steuerlogik (410; 610) derartige Steuersignale ausgibt, daß für jeweilige elektronische Komponenten (40, 80, 90, 260, 320, 180) die Versorgungsspannung und die Verstärkung ansprechend auf eine Zunahme der Eingangssignalstärke reduziert, die Versorgungsspannung und die Verstärkung ansprechend auf eine Abnahme des Batterieladezustands weiter reduziert, bei Abnahme von Empfangssignalstörungen ein Filter (70) mit niedrigerer Einfügedämpfung und breiterem Durchlaßfrequenzband ausgewählt, und die Taktgeschwindigkeit von digitalen Komponenten (320) ansprechend auf eine Abnahme der Datenratenübertragungsrate reduziert wird.

8. Sende/Empfangsschaltung gemäß einem der vorhergehenden Ansprüche, die für jede Komponente, deren Versorgungsspannung oder Verstärkung über die Steuersignale durch die Steuerlogik (410; 610) gesteuert wird, einen Spannungsregler (280, 290, 300, 310, 330, 333, 336; 430, 440; 620, 625, 630, 635, 640, 650, 660, 670, 680) aufweist, der ein Steuersignal empfängt und die Versorgungsspannung oder eine Biasspannung entsprechend dem Steuersignal an die zugeordnete Komponente ausgibt.

9. Sende/Empfangsschaltung gemäß Anspruch 8, bei der jeder Spannungsregler (280- 310, 330- 336; 430, 440; 620- 680) ein Linear- oder ein Schaltregler ist.

10. Sende/Empfangsschaltung gemäß Anspruch 5 , bei der die Komponenten einen Eingangsverstärker (40), einen Ausgangsverstärker (180), einen Oszillator (260), einem Mischer (50), ein Filter (70), einen Zwischenfrequenzverstärker (80, 90), eine Phasenerfassungsschaltung (240) und einen Frequenzdoppler (270) umfassen.

## Claims

1. A transceiver circuit, comprising:
a plurality of intermediate frequency filters (70), each having a different passband width and insertion attenuation;
a control logic (410; 610) adapted to select one of the plurality of intermediate frequency filters (70) for intermediate frequency filtering, depending on adjacent channel noise information; and
means for detecting adjacent channel noise information, comprising:
means for detecting a receive signal strength value before the selected intermediate frequency filter;
means for detecting a receive signal strength value after the selected intermediate frequency filter; and
means for comparing the two receive signal strength values before and after the selected frequency filter to obtain the adjacent channel noise information, under consideration of the insertion attenuation of the selected filter, the means for comparing having a correction means for correcting the receive signal strength value before the selected intermediate frequency filter with the insertion attenuation of the selected intermediate frequency filter.

2. The transceiver circuit according to claim 1, wherein the control logic (410; 610) is adapted to activate or deactivate the intermediate frequency filter (70a; 70b) in dependence on the selection.

3. The transceiver circuit according to one of claims 1 or 2, further comprising:
an intermediate frequency mixer, whose amplification can be controlled via a supply voltage,
the control logic (410; 610) further being adapted to control the supply voltage of the intermediate frequency mixer in dependence on a receive signal strength value.

4. The transceiver circuit according to one of claims 1 to 3, further comprising:
a digital electronic component (320);
a voltage regulator connected to the digital electronic component, for supplying the digital electronic component with a supply voltage; and
a clock generator connected to the digital electronic component for supplying a clock to the digital electronic component,
the control logic (410; 610) further being adapted to control the clock generator and the voltage regulator such that during a change from an operation requiring a first baud rate, which is smaller than the first, the supply voltage and the clock speed are reduced.

5. The transceiver circuit according to one of claims 1 to 4, further comprising:
a plurality of further electronic components (40, 80, 90, 320, 180), the electronic components being connected to cooperate for transmitting and receiving data, the components (40, 80, 90, 260, 320, 180) being controllable by control signals,
wherein the control logic (410; 610) is connected to the plurality of electric components (40, 80, 90, 260, 320, 180), for monitoring current operating parameters of the transceiver circuit and for outputting control signals to the plurality of components (40, 80, 90, 260, 320, 180) in dependence on the current operating parameters, the control signals in the components (40, 80, 90, 260, 320, 180) comprising at least two parameters of a group of parameters consisting of supply voltage, amplification, filter selection and clock speed, in which at least one of the components (320) is operated.

6. The transceiver circuit according to claim 5, wherein the current operating parameters comprise a receive signal strength value, battery charging state information, receive signal noise information and information about whether a transmit or receive process is present.

7. The transceiver circuit according to claim 6, wherein the control logic (410; 610) outputs such control signals, that for respective electronic components (40, 80, 90, 260, 320, 180), the supply voltage and the amplification are reduced in response to an increase of the input signal strength, the supply voltage and the amplification are further reduced in response to a decrease of the battery charging state, and a filter (70) with lower insertion attenuation and broader passband frequency band is selected when the receive signal noises are decreased, and the clock speed of digital components (320) is reduced in response to a decrease of the data rate transmission rate.

8. The transceiver circuit according to one of the previous claims, comprising a voltage regulator (280, 290, 300, 310, 330, 333, 336; 430, 440; 620, 625, 630, 635, 640, 650, 660, 670, 680) for every component whose supply voltage or amplification is controlled via the control signals by the control logic (410; 610), which receives a control signal and outputs the supply voltage or bias voltage corresponding to the control signal to the associated component.

9. The transceiver circuit according to claim 8, wherein every voltage regulator (280- 310, 330- 336; 430, 440; 620- 680) is a linear or switching regulator.

10. The transceiver circuit according to claim 5, wherein the components comprise an input amplifier (40), an output amplifier (180), an oscillator (260), a mixer (50), a filter (70), an intermediate frequency amplifier (80, 90), a phase detection circuit (240) and a frequency doubler (270).

## Revendications

1. Circuit émetteur-récepteur avec
une pluralité de filtres de fréquence intermédiaire (70) présentant, chacun, une largeur de bande passante et une atténuation d'insertion différentes ;
une logique de commande (410 ; 610) qui est adaptée pour sélectionner, en fonction d'informations sur les perturbations de canaux adjacents, l'un parmi la pluralité de filtres de fréquence intermédiaire (70) pour la filtration des fréquences intermédiaires ; et
un dispositif destiné à saisir les informations sur les perturbations de canaux adjacents, avec
un dispositif destiné à saisir une valeur d'intensité de signal de réception avant le filtre de fréquence intermédiaire sélectionné;
un dispositif destiné à saisir une valeur d'intensité de signal de réception après le filtre de fréquence intermédiaire sélectionné; et
un dispositif destiné à comparer les deux valeurs d'intensité de signal de réception avant et après le filtre de fréquence intermédiaire sélectionné, pour obtenir les informations sur les perturbations de canaux adjacents, en tenant compte de l'atténuation d'insertion du filtre sélectionné, le dispositif destiné à comparer présentant un dispositif de correction destiné à corriger la valeur d'intensité de signal de réception avant le filtre de fréquence intermédiaire sélectionné par l'atténuation d'insertion du filtre de fréquence intermédiaire sélectionné.

2. Circuit émetteur-récepteur selon la revendication 1, dans lequel la logique de commande (410 ; 610) est adaptée pour activer ou désactiver, en fonction de la sélection, les filtres de fréquence intermédiaire (70a, 70b).

3. Circuit émetteur-récepteur selon l'une des revendications 1 ou 2, présentant, par ailleurs, la caractéristique suivante :
un mélangeur de fréquence intermédiaire dont l'amplification est réglable par l'intermédiaire d'une tension d'alimentation,
la logique de commande (410 ; 610) étant, par ailleurs, adaptée pour régler, en fonction d'une valeur d'intensité de signal de réception, la tension d'alimentation du mélangeur de fréquence intermédiaire.

4. Circuit émetteur-récepteur selon l'une des revendications 1 à 3, présentant, par ailleurs, les caractéristiques suivantes :
un composant électronique numérique (320) ;
un régulateur de tension qui est relié au composant électronique numérique, pour alimenter le composant électronique numérique en une tension d'alimentation ; et
un générateur de cycles d'horloge qui est relié au composant électronique numérique, pour alimenter un cycle d'horloge vers le composant électronique numérique,
la logique de commande (410 ; 610) étant, par ailleurs, adaptée pour commander le générateur de cycles d'horloge et le régulateur de tension de sorte que, en cas de changement d'un fonctionnement qui requiert une première vitesse de bauds qui est inférieure à la première, la tension d'alimentation et la vitesse de cycle d'horloge soient réduites.

5. Circuit émetteur-récepteur selon l'une des revendications 1 à 4, présentant, par ailleurs, la caractéristique suivante :
une pluralité d'autres composants électroniques (40, 80, 90, 320, 180), les composants électroniques étant reliés de manière à coopérer entre eux pour l'émission et la réception de données, les composants (40, 80, 90, 260, 320, 180) pouvant être commandés par des signaux de commande,
la logique de commande (410 ; 610) étant reliée à la pluralité de composants électriques (40, 80, 90, 260, 320, 180), pour surveiller les paramètres de fonctionnement momentanés du circuit émetteur-récepteur et pour sortir des signaux de commande vers la pluralité de composants (40, 80, 90, 260, 320, 180) en fonction des paramètres de fonctionnement momentanés, les signaux de commande comprenant, dans les composants (40, 80, 90, 260, 320, 180), au moins deux paramètres d'un groupe de paramètres composé de la tension d'alimentation, de l'amplification, d'une sélection de filtre et de la vitesse de cycle d'horloge selon laquelle fonctionne au moins l'un des composants (320).

6. Circuit émetteur-récepteur selon la revendication 5, dans lequel les paramètres de fonctionnement momentanés comprennent une valeur d'intensité de signal de réception, des informations d'état de charge de batterie, des informations de perturbation de signal de réception et des informations relatives à s'il est présent une opération d'émission ou de réception.

7. Circuit émetteur-récepteur selon la revendication 6, dans lequel la logique de commande (410 ; 610) sort des signaux de commande tels que, pour les composants électroniques (40, 80, 90, 260, 320, 180) respectifs, la tension d'alimentation et l'amplification se réduisent en réaction à une augmentation de l'intensité de signal d'entrée, la tension d'alimentation et l'amplification se réduisent davantage en réaction à une réduction de l'état de charge de batterie, qu'en supposant des perturbations de signal de réception soit sélectionné un filtre (70) à faible atténuation d'insertion et à bande de fréquence passante plus large, et que la vitesse de cycle d'horloge des composants numériques (320) se réduise en réaction à une diminution du taux de transmission de données.

8. Circuit émetteur-récepteur selon l'un des revendications précédentes, présentant, pour chaque composant dont la tension d'alimentation ou l'amplification est réglée, par l'intermédiaire des signaux de commande, par la logique de commande (410 ; 610), un régulateur de tension (280, 290, 300, 310, 330, 333, 336 ; 430, 440 ; 620, 625, 630, 635, 640, 650, 660, 670, 680) qui reçoit un signal de commande et qui sort la tension d'alimentation ou une tension de polarisation selon le signal de commande vers le composant associé.

9. Circuit émetteur-récepteur selon la revendication 8, dans lequel chaque régulateur de tension (280-310, 330-336 ; 430, 440 ; 620-680) est un régulateur linéaire ou de commutation.

10. Circuit émetteur-récepteur selon la revendication 5, dans lequel les composants comportent un amplificateur d'entrée (40), un amplificateur de sortie (180), un oscillateur (260), un mélangeur (50), un filtre (70), un amplificateur de fréquence intermédiaire (80, 90), un circuit de détection de phase (240) et un doubleur de fréquence (270).
